**Europäisches Patentamt**

**European Patent Office**

**Office européen des brevets**

(19)

(11) Veröffentlichungsnummer: **0 352 497 B1**

(12) # EUROPÄISCHE PATENTSCHRIFT

(45) Veröffentlichungstag der Patentschrift:
08.01.92 Patentblatt 92/02

(51) Int. Cl.⁵: **G01F 23/24**

(21) Anmeldenummer: **89111883.8**

(22) Anmeldetag: **30.06.89**

(54) **Elektroden zur Messung von Füllständen in Milchflussmessern.**

(30) Priorität: **23.07.88 DE 3825112**

(43) Veröffentlichungstag der Anmeldung:
**31.01.90 Patentblatt 90/05**

(45) Bekanntmachung des Hinweises auf die
Patenterteilung:
**08.01.92 Patentblatt 92/02**

(84) Benannte Vertragsstaaten:
**FR GB IT NL SE**

(56) Entgegenhaltungen:
**DE-A- 3 203 175**
**DE-U- 8 603 349**
**GB-A- 2 173 172**

(73) Patentinhaber: **Westfalia Separator AG**
**Werner-Habig-Strasse 1 Postfach 3720**
**W-4740 Oelde 1 (DE)**

(72) Erfinder: **Icking, Friedrich, Dipl.-Ing.**
**Paul-Keller-Strasse 1**
**W-4740 Oelde (DE)**

EP 0 352 497 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur Messung von Füllständen in Milchflußmessern mit Elektroden, die in einem gemeinsamen Halter aus nichtleitendem Material, der den Boden des Milchflußmessers abdichtend durchdringt, so angeordnet sind, daß ihre aktiven Flächen einen vertikalen Abstand zueinander haben, wobei die Elektroden als nebeneinander angeordnete Stifte ausgebildet sind.

Derartige Elektroden sind beispielsweise bekannt aus der EP-B 0047555, wobei die Elektroden bei ihrer Aktivierung durch den sich ändernden Flüssigkeitsstand im Milchflußmesser einen Ventilkörper betätigen, der eine Ablaufbohrung im Boden des Milchflußmessers in Abhängigkeit vom Flüssigkeitsstand öffnet oder schließt. Falls der ständig zwischen den beiden Elektroden sich bewegende Flüssigkeitsstand zur Berechnung der Milchflußleistung benutzt wird, ist es erforderlich, daß die Elektroden ein Signal bei jeweils exakt gleichem Flüssigkeitsstand abgeben. Bei der bekannten Vorrichtung sind die Elektroden als Ringelektroden ausgebildet. Es hat sich gezeigt, daß derartig ausgebildete Elektroden nicht immer bei dem gleichen Flüssigkeitsstand aktiviert werden. Dies liegt daran, daß der Schaltpunkt bzw. die Schalthöhe an den Elektroden nicht genau definiert ist, weil zunächst ein gewisser Teil der Mantelfläche von der Flüssigkeit berührt sein muß, bevor ein Signal ausgelöst wird. Durch organische, anorganische und mineralische Bestandteile in der Milch können sich Beläge auf den Oberflächen der Elektroden bilden, die deren Übergangswiderstand verändern und damit auch die Schalthöhe. Außerdem führt die Anordnung der Elektroden in der beschriebenen Form zu einer aufwendigen Konstruktion des Halters.

Es sind auch bereits stiftförmige Elektroden eingesetzt worden, deren Mantelflächen teilweise von einer Isolierschicht umgeben waren (siehe z.B. GB-A-2173172). Bei diesen Elektroden kann am Übergang von der freien Mantelfläche zur Isolierschicht ein Flüssigkeitsring z.B. durch Adhäsion oder Kohäsion zurückbleiben, der zu einer Veränderung des korrekten Schaltpunktes führen kann. Außerdem führen auch bei dieser Form Beläge auf der Mantelfläche zu Meßfehlern.

Aufgabe der Erfindung ist es, die Elektroden so auszubilden, daß die Meßgenauigkeit erhöht und die Herstellung derselben vereinfacht wird.

Diese Aufgabe wird bei einer Vorrichtung gemäß dem Oberbegriff des Anspruchs 1 dadurch gelöst, daß der Halter so ausgebildet ist, daß die innerhalb des Milchflußmessers liegenden zylindrischen Mantelflächen der Elektroden vollständig vom Halter umfaßt werden, so daß als aktive Flächen nur die Stirnflächen der Elektroden wirksam sind.

Es hat sich überraschend gezeigt, daß bei den so ausgebildeten Elektroden die entsprechenden Signale immer bei dem gleichen Füllstand ausgelöst werden. Ein Signal wird erst dann ausgelöst, wenn die Flüssigkeit von unten kommend die Kuppenhöhe der betreffenden Elektrode erreicht hat. Es genügt dann eine ganz dünne Überdeckung, um den Stromkreis zu schließen.

Die Ausbildung der Elektroden als nebeneinander angeordnete Stifte führt zu einer sehr einfachen Form derselben, die sich leicht in einem im Spritzverfahren hergestellten Halter aus Kunststoff vorsehen läßt. Die entsprechenden Anschlüsse für die elektrischen Leitungen liegen außerhalb des Halters, und es ist daher keine Kabelführung durch den Halter erforderlich wie bei der bekannten Ausführung.

In einer vorteilhaften Ausführungsform ist im Halter zusätzlich eine als Stift ausgebildete Masseelektrode vorgesehen, deren zylindrische Mantelfläche frei liegt. Dies ist insbesondere dann vorteilhaft, wenn der Milchflußmesser vollständig aus Kunststoff gefertigt wird.

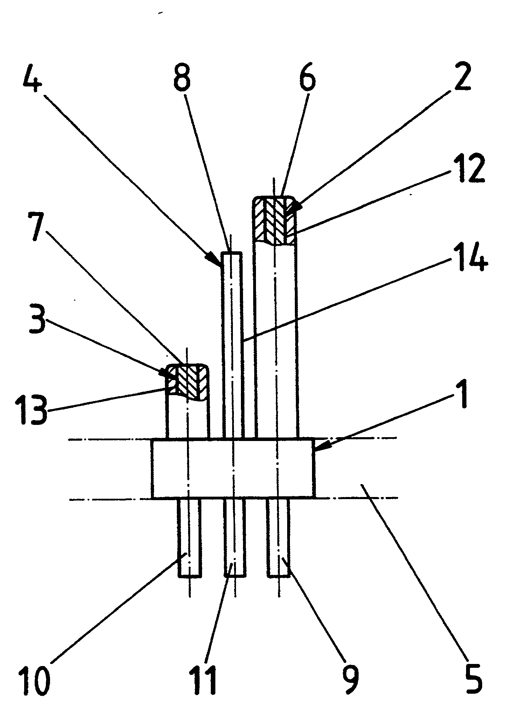

Ein Ausführungsbeispiel der Erfindung ist in der Zeichnung dargestellt und wird nachstehend näher erläutert.

Mit 1 ist der Halter bezeichnet, in dem die Elektroden 2, 3 und die Masseelektrode 4 nebeneinander angeordnet sind.

Der schematisch angedeutete Boden 5 eines Milchflußmessers wird vom Halter 1 in der Weise durchdrungen, daß die aktiven Stirnflächen 6, 7, 8 der Elektroden 2, 3, 4 innerhalb des Milchflußmessers angeordnet sind, während deren entsprechende Kabelanschlüsse 9, 10, 11 außerhalb des Milchflußmessers vorgesehen sind. Die Mantelflächen 12, 13 der Elektroden 2, 3 sind vollständig vom Halter 1 umschlossen, so daß als aktive Flächen nur ihre Stirnflächen 6, 7 wirksam sind. Im Gegensatz dazu liegt die Mantelfläche 14 der Masseelektrode 4 vollständig frei und ist damit als aktive Fläche wirksam.

## Patentansprüche

1. Vorrichtung zur Messung des Füllstandes in einem Milchflußmesser mit Elektroden (2, 3), die in einem gemeinsamen Halter (1) aus nichtleitendem Material, der den Boden des Milchflußmessers abdichtend durchdringt, so angeordnet sind, daß ihre aktiven Flächen einen vertikalen Abstand zueinander haben, wobei die Elektroden (2, 3) als nebeneinander angeordnete Stifte ausgebildet sind, dadurch gekennzeichnet, daß der Halter so ausgebildet ist, daß die innerhalb des Milchflußmessers liegenden zylindrischen Mantelflächen (12, 13) der Elektroden vollständig vom Halter (1) umfaßt werden, so daß als aktive Flächen nur die Stirnflächen (6, 7) der Elektroden (2, 3) wirksam sind.

2. Vorrichtung nach Anspruch 1, dadurch gekennzeichnet, daß im Halter (1) zusätzlich eine als Stift ausgebildete Masseelektrode (4) vorgesehen ist, deren zylindrische Mantelfläche (14) frei liegt.

3. Vorrichtung nach Anspruch 1 oder 2, dadurch gekennzeichnet, daß die Länge der Masseelektrode (4) so gewählt ist, daß ihre Stirnfläche (8) zwischen den Stirnflächen (6, 7) der Elektroden (2, 3) angeordnet ist und ihre freie Mantelfläche (14) unterhalb der Stirnflächen (6, 7) der Elektroden (2, 3) beginnt.

## Claims

1. Device for measuring the level of milk in flowmeters by means of electrodes (2, 3) positioned together in a holder (1) of a non-conductive material that extends tight through the bottom of the flowmeter, with their active surfaces at a vertical distance to each other, whereby the electrodes (2, 3) are in the form of adjacent pins characterized in that the holder is formed in a way to ensure that the cylindrical surfaces (12, 13) of the electrodes inside the milk flowmeter are completely surrounded by the holder (1) to the extent that only the faces (6, 7) of the electrodes (2, 3) are active.

2. Device as in claim 1 comprising a pin-shaped ground electrode (4) fixed in the holder (1) with its cylindrical surface (14) exposed.

3. Device as in claim 1 or 2 wherein the length of the ground electrode (4) is selected such that its end face (8) is positioned between the end faces (6, 7) of electrodes (2, 3) and its free surface (14) commences below the end faces (6, 7) of the electrodes (2, 3).

## Revendications

1. Dispositif de mesure du niveau de remplissage dans un compteur à lait utilisant des électrodes (2, 3), disposées dans un support commun (1) en matière non conductible de telle façon qu'il y a un écart vertical entre leurs surfaces actives, les électrodes (2, 3) étant conçues en forme de goupilles disposées l'une à côté de l'autre, caractérisé par le fait que le support est construit de manière à ce que les nappes cylindriques (12, 13) des électrodes se trouvant à l'intérieur du compteur à lait soient complètement enfoncées dans le support (1) de sorte que seul les faces frontales (6, 7) des électrodes (2, 3) servent de surfaces actives.

2. Dispositif selon la revendication 1, caractérisé par le fait que dans le support (1) il est disposé une électrode cylindrique de masse supplémentaire (4) dont la nappe (14) est découverte.

3. Dispositif selon les revendications 1 ou 2, caractérisé par le fait que la longueur de l'électrode de masse (4) est telle que sa face frontale (8) se trouve entre les faces frontales (6, 7) des électrodes (2, 3) et que l'extrémité inférieure de sa nappe découverte (14) se trouve en-dessous des faces frontales (6, 7) des électrodes (2, 3).